Europäisches Patentamt

European Patent Office

Office européen des brevets

(11) Publication number: **0 050 505**
**B1**

(12) **EUROPEAN PATENT SPECIFICATION**

(45) Date of publication of patent specification: **19.12.84**

(21) Application number: **81304870.9**

(22) Date of filing: **19.10.81**

(51) Int. Cl.³: **B 01 J 8/04,** C 10 G 49/00 //
B01D53/18

(54) Apparatus for contacting a gas and a liquid.

(30) Priority: **20.10.80 US 198793**
**04.12.80 US 212755**

(43) Date of publication of application:
**28.04.82 Bulletin 82/17**

(45) Publication of the grant of the patent:
**19.12.84 Bulletin 84/51**

(84) Designated Contracting States:
**BE DE FR GB IT NL**

(56) References cited:
**US-A-3 425 810**
**US-A-3 524 731**
**US-A-3 607 000**
**US-A-3 702 238**
**US-A-3 796 655**
**US-A-4 126 539**

(73) Proprietor: **Exxon Research and Engineering
Company**
**P.O.Box 390 180 Park Avenue**
**Florham Park New Jersey 07932 (US)**

(72) Inventor: **Gupta, Ramesh**
**420 River Road Apt.F6**
**Chatham Township New Jersey (US)**

(74) Representative: **Somers, Harold Arnold et al**
**ESSO Engineering (Europe) Ltd. Patents &
Licences Apex Tower High Street**
**New Malden Surrey KT3 4DJ (GB)**

Courier Press, Leamington Spa, England.

## Description

This invention relates to apparatus for contacting gases and liquids. For example, the apparatus can be used for a liquid and gas mixture reacting in a fixed bed. The invention is also applicable to packed absorption towers operating with cocurrent gas liquid flow.

In the normal operation of fixed bed hydroprocessing oil refining reactors, the top of the catalyst bed often becomes fouled or plugged by organometallic compounds, polymeric material, carbonaceous deposits and particulates. The plugging of the catalyst bed is undesirable, since the resultant increase in pressure drop necessitates costly shut-downs and requires time-consuming repairs and maintenance.

In an effort to overcome this problem, many schemes have been devised, wherein each reactor is provided with more than one catalyst bed, and a plugged bed is bypassed to extend the operating life of the reactor.

One such bypass scheme is shown in U.S. Patent No. 3,509,043. In this reactor, catalyst bed bypass tubes are designed to burst open when the initial catalyst bed becomes fouled, and when a predetermined pressure drop is reached within the reactor. Under normal circumstances this bypass design will provide a workable means for extending the operability of the reactor. However, such a system is particularly sensitive to sudden changes in the feed flow rate of the reaction materials. These changes can often cause a premature bursting of the rupture discs.

Another U.S. patent illustrating the use of rupture discs is illustrated in Patent No. 3,796,655.

In this sytem, the bypassed material is directed upwardly in order to provide a dislodging backflow, and thus, unfoul the crusted or plugged catalyst bed.

The bypassing schemes of these and other inventions achieve bypassing of the fouled catalyst bed with low pressure drop. High pressure drop bypassing is undesirable since the higher pressure drop puts a strain on the pumps and compressors which maintain the flow rate of the materials through the reactor. The low pressure drop for bypassing is achieved by employing a moving or a destructible component such as a rupture disc. These moving or destructible components are not reliable and can fail to operate or can operate prematurely.

US—A—3607000 discloses an apparatus for contacting a gas and a liquid comprising a vessel, means for introducing a gas and a liquid into the vessel, at least one main bed of solids disposed in said vessel, at least one auxiliary bed of solids disposed in said vessel above said main bed for the passage therethrough of gas and liquid, at least one liquid by-pass conduit extending through the auxiliary bed up to a level at least as high as the top level of the auxiliary bed. In some embodiments, the liquid by-pass conduit is closed by a rupture disc which bursts when the pressure drop across the auxiliary bed exceeds the bursting pressure of the disc. Such embodiments are subject to all the disadvantages described above in relation to US—A—3509043 and US—A—3796655. In another embodiment, the liquid by-pass tube is closed by a butterfly valve which can be opened by manual operation. This latter embodiment requires human supervision which again is not reliable and which, moreover, adds to operating costs.

It is one object of the invention to provide a two phase, liquid and gas, fixed bed, contact apparatus, for example, a reactor, having an appreciably extended operating life.

It is a further object of this invention to provide an apparatus capable of effecting a material bypass from a clogged or fouled bed to another bed with a low pressure drop.

The present invention provides apparatus for contacting a gas and a liquid comprising a vessel; means for introducing a gas and a liquid into the vessel; at least one main bed of solids disposed in said vessel; and when required, means for the exit of gas and liquid from the vessel; at least one auxiliary bed of solids disposed in said vessel above said main bed for the passage therethrough of gas and liquid; at least one liquid bypass conduit within said vessel extending through the auxiliary bed up to a level at least as high as the top level of the auxiliary bed, characterized in that the liquid bypass conduit is an unobstructed tube presenting a selected pressure drop for the passage of liquid therethrough which exceeds the pressure drop for the passage of liquid through the auxiliary bed before the latter becomes fouled but which is not greater than the pressure drop for the passage of liquid through the auxiliary bed when the latter is fouled, whereby during operation, liquid passes preferentially through the auxiliary bed when the pressure drop therethrough is less than the said selected pressure drop, and liquid passes preferentially through the liquid by-pass conduit when the pressure drop through the auxiliary bed exceeds the selected pressure drop due to fouling of the latter.

The apparatus may comprise at least one gas by-pass conduit within the said vessel and extending through the auxiliary bed (e.g. from the bottom thereof) up to a level above the top of the liquid by-pass conduit and presenting a higher pressure drop for the passage of gas therethrough than the auxiliary bed when the latter is not fouled, whereby during operation, gas passes preferentially through the auxiliary bed when the pressure drop therethrough is less than the pressure drop through the gas by-pass conduit, and gas passes preferentially through the gas by-pass conduit when the pressure drop therethrough is exceeded by the pressure drop through the auxiliary bed.

Thus, the apparatus of the invention may comprise a reactor for reacting a liquid and gas mixture in a fixed bed. The said reactor may comprise a reaction vessel into which both liquid and gas are introduced. The reactor may have a main bed disposed therein, and at least one auxiliary bed disposed above the main bed. The auxiliary bed may have separate liquid and gas bypasses comprising relatively different lengths of hollow tubing extending through the auxiliary bed. The gas bypass tubing may project to a greater height above the auxiliary bed than the liquid bypass tubing. This tubing arrangement provides a low pressure drop bypass for both said liquid and gas to the main bed, when the auxiliary bed becomes fouled.

The reactor may normally additionally contain a flow distributor above each bed to distribute or spread the reactants relatively evenly over and/or through the entire bed.

A typical reactor of the invention can be a hydroprocessing reactor wherein different petroleum fractions are treated with hydrogen gas. The bed of solid particles in the hydroprocessing reactor may be a catalyst containing a metal or a mixture of metals selected from the group of cobalt, molybdenum and nickel disposed on an alumina support. The reaction may remove, for example, impurities such as sulfur via a hydrodesulfurization reaction. Other important reactions taking place in a hydroprocessing reactor may include hydrogenation, hydrodenitrogenation, hydrotreating, hydrofinishingand hydrocracking. The invention is also applicable to absorption towers.

The invention will be better understood and will become more apparent with reference to the following detailed description considered in conjunction with the accompanying drawings described below.

Brief Description of the Drawings

Figure 1 is a schematic view of a typical known hydroprocessing reactor having a single fixed bed without the bypassing apparatus of this invention;

Figure 1a is a schematic view of the known reactor of Figure 1, depicting the fouling of the bed;

Figure 2 illustrates a reactor and bypassing apparatus of the invention in schematic view;

Figure 2a depicts in schematic view an alternate embodiment of the apparatus shown in Figure 2;

Figures 3 and 4 show a graphical comparison of the extended operation time of the reactor and bypassing apparatus of the invention illustrated in Figure 2 as compared with the prior art reactor of Figure 1;

Figure 5 illustrates another reactor and bypassing apparatus of the invention in schematic view;

Figure 5a depicts in schematic view an alternate embodiment of the apparatus shown in Figure 5;

Figures 6 and 6a illustrate in schematic view still other embodiments of the invention, Figure 6a being a further modification of an alternate embodiment dipicted in Figure 6; and

Figure 7 shows a graphical comparison of the extended operation time of the reactor and bypassing apparatus of the invention illustrated in Figure 6 as compared with the prior art reactor of Figure 1.

Detailed Description of the Invention

The invention will be described with reference to an apparatus for contacting and reacting a liquid and a gas, with particular reference to hydroprocessing.

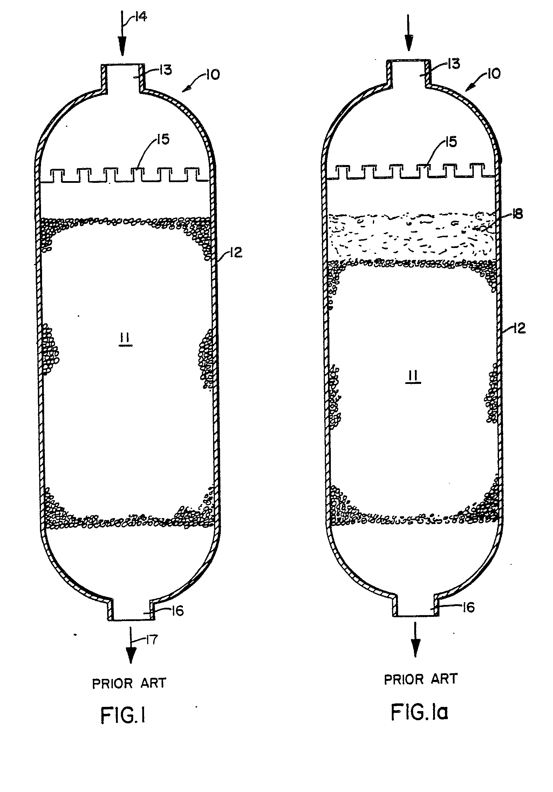

Generally speaking, fixed bed hydroprocessing reactors of the type shown schematically in Figure 1 are often limited in their operation by a build-up in the pressure drop in the catalyst bed 11, as the bed becomes fouled or plugged by impurities and particulates contained in the feed stock, as shown in Figure 1a.

The reactor 10 comprises a vessel or reaction chamber 12. The feed stock, generally a petroleum fraction is fed into the mouth 13 of the vessel 12 along with a treating gas, such as hydrogen, as shown by arrow 14. A flow distributor 15 disposed above the catalytic bed 11 distributes the liquid and gas so that the catalyst bed 11 is evenly saturated. The reaction products leave the vessel 12 through exit port 16, as shown by arrow 17.

Figure 1a shows the reactor of Figure 1 with a plugged catalyst bed 11, as illustrated by the crusted top portion 18 of bed 11. The plugging of the reactor 10 is accompanied by a rapid build-up in pressure drop, as aforementioned.

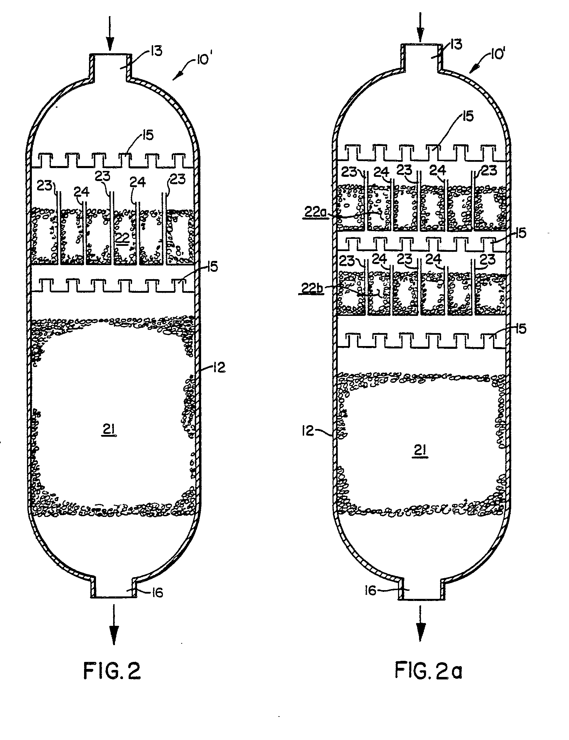

Referring now to Figures 2 and 2a, like components have been given the same designation for the sake of brevity. The reactor 10' is comprised of a reaction vessel 12 having an inlet 13 and an outlet 16, as mentioned before. The invention has a main catalyst bed 21 and an auxiliary catalyst bed 22 disposed above the bed 21, as shown. Distributors 15 are located above each bed 21 and 22, respectively.

The auxiliary catalyst bed 22 comprises different lengths of hollow tubing 23 and 24 extending therethrough. The longer tubes 23 project to a greater height above the auxiliary bed, than tubes 24.

When the catalyst bed 22 is not fouled or plugged, the bed 22 has a low resistance to flow in comparison to the resistance by the bypass tubing 23 and 24, a substantial part of the incoming materials will pass through the bed 22 to enter bed 21. A small amount of the materials will pass through tubing 23 and 24 before entering bed 21.

As the bed 22 becomes plugged and the resistance of bed 22 to flow increases, the incoming liquid will take the path of least resistance, and flow down through the shorter tubing 24, because the liquid will seek its lowest level, namely, the top of bed 22 and the adjacent short tubing 24. The incoming treating gas will then be free to flow in separate fashion through the longer tubing 23. Thus, the liquid and gas will flow to the main catalyst bed 21 through separate respective tubes 24 and 23, where it will now react.

The result of this inventive arrangement is that the reactor's operating life is extended because the reactor vessel 10' continues to operate despite the fouling of the upper catalyst bed 22.

An important feature of the invention is the low pressure drop accompanying the separate flow of the liquid and gas through respective tubes 24 and 23. This pressure drop would otherwise be high, if the tubing were of equal lengths and heights above bed 22, and the liquid and the gas had a mixed flow through the bypass tubing. Because of this feature, the operating life of the reactor is extended many fold.

As an illustration, assume that the height of the auxiliary bed 22 is 0.9144 metres (three feet). Under the typical gas and liquid flow rates used in commercial hydroprocessing reactors, the pressure drop across an unfouled catalyst bed of 0.9144 metres (three feet) height is about 70.31 g/cm² (1 psi). The tubes 23 and 24 are sized so that if all the gas flows through the short and long tubes 24 and 23, the tubing pressure drop will be much higher than the pressure drop of unfouled bed 22. As an illustration and for the sake of discussion, assume that the tubing pressure drop is 703.07 g/cm² (10 psi) (10 times the pressure drop of the unfouled catalyst bed 22). When the catalyst bed 22 is not fouled, the majority of the materials will, therefore, flow through the catalyst bed 22. A small flow of gas through the tubes 23 and 24 will not create any significant maldistribution problem. Any flow maldistribution will be corrected by the distributor 15 disposed above bed 21.

As the bed 22 begins to foul, an increasing fraction of the gas flow will be directed to the tubes 23 and 24. Until the bed 22 is severely fouled, the liquid will continue to flow through the bed 22, because the liquid seeks its lowest level. When the bed 22 is severely fouled so that the liquid can no longer flow through it, the liquid flow will be directed to the short tubes 24. Because only the longer tubes 23 will now be available for gas flow, the pressure drop will be higher than 703.07 g/cm² (10 psi). In this illustration, the pressure drop will be, say 1.75768 kg/cm² (25 psi). Note that if all the tubes were of the same elevation above the bed and the gas and liquid flowed in the tubes as a two phase gas-liquid mixture, the bypassing pressure drop will be much higher than 1.75768 kg/cm² (25 psi).

Thus, the fouled catalyst bed is bypassed with a pressure drop of only 1.75768 kg/cm² (25 psi). If this fouled catalyst bed was not bypassed, the pressure differential would build up rapidly and force a unit shutdown.

Figure 2a illustrates another embodiment of the invention depicted in Figure 2. In this embodiment the single auxiliary catalyst bed 22 of the Figure 2 is replaced by at least two auxiliary catalyst beds herein designated 22a and 22b. Each of these beds operate in the same manner as described above, and each auxiliary bed will increase the operating life of the reactor in its own right. In this fashion, the operating life of the reactor 10' can be extended in multiples of the several fold increases common to only one auxiliary bed and bypass arrangement, as shown in Figure 2.

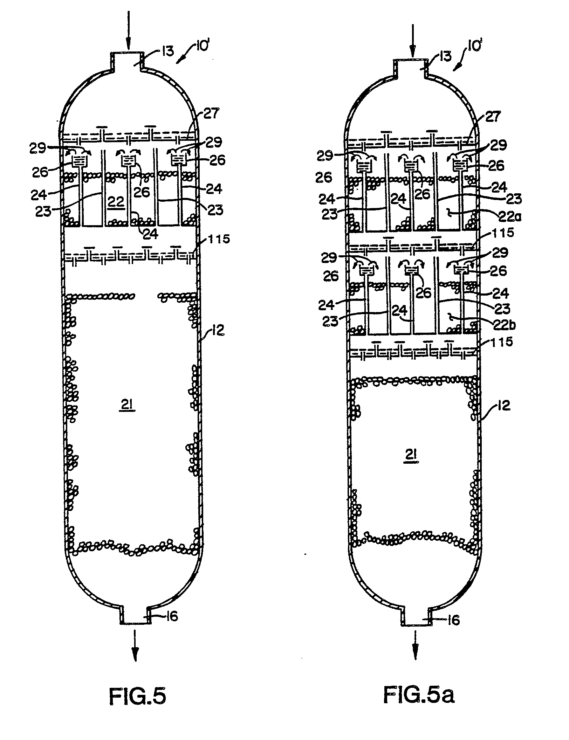

Referring now to the embodiments shown in Figures 5 and 5a, again like components have been given the same designation for the sake of brevity. The reactor 10' is comprised of a reaction vessel 12 having an inlet 13 and an outlet 16, as mentioned before. The invention has a main catalyst bed 21 and an auxiliary catalyst bed 22 disposed above the bed 21 as shown.

The auxiliary catalyst bed 22 in Figure 5 comprises generally different lengths of hollow tubing 23 and 24, respectively extending therethrough. The tubes 24 have flow receptacles 26 at the top.

A flow distributor 27 is disposed above the auxiliary bed 22 to evenly distribute the liquid to the liquid flow receptacles 26 as shown in Figure 5.

The distributor 27 can be chosen from many types of distributors that are used in fixed bed reactors with two phase gas and liquid flow. One such distributor which is particularly suitable is described in U.S. Patent No. 3,524,731.

A distributor 115 is also disposed above the main bed 21. The purpose of distributor 115 is to evenly saturate the bed.

When the auxiliary bed 22 is not fouled or clogged, the auxiliary bed 22 offers a low resistance to flow in comparison to the bypass tubing 23 and 24. Under the condition of no fouling, only a very small fraction of the liquid passes through the tubes 24. The majority of the liquid spills from the flow receptacles 26 as shown by spill-over arrows 29, and passes through the catalyst bed 22. Similarly, the majority of gas passes through the unfouled bed 22, because the gas bypass tubes 23 offer higher resistance to flow in comparison to the unfouled bed 22. No gas passes through the liquid bypass tubes 24, because the liquid is spilling from the flow receptacles 26, and the liquid inside these flow receptacles provides a liquid seal which prevents the bypassing of gas through the tubes 24. The liquid spilling from the flow receptacles 26 seeks its lowest level and flows through the auxiliary bed 22. Therefore, only gas is free to flow through the gas by-pass tubes 23.

As the catalyst bed 22 fouls, the pressure drop across the bed 22 increases. The increased pressure drop forces the liquid through the bypass tubes 24, and the gas through the bypass tubes 23. Thus, the liquid and gas will now enter the main bed 21 through separate respective tubes 24 and 23.

The result of this inventive arrangement is that the reactor's operating life is extended because the reactor vessel 10' continues to operate despite the fouling of the upper catalyst bed 22.

An important feature of the invention is the low pressure drop accompanying the separate flow of liquid and gas through respective tubes 24 and 23. The pressure drop for bypassing the fouled catalyst bed 22 would otherwise be high, if the bypass tubes 24 and 23 had a mixture of gas and liquid flowing through them. Because of this feature, the operating life of the reactor is extended many fold.

As an illustration, assume that the height of the auxiliary bed 22 is 0.9144 metres (three feet). Under the typical gas and liquid flow rates used in commercial hydroprocessing reactors, the pressure drop across an unfouled catalyst bed of 0.9144 metres (three feet) height is about 70.307 g/cm² (1 psi). The tubes 24 and 23 are sized so that if all liquid and gas flow through respective tubes 24 and 23, the tubing pressure drop will be much higher than the pressure drop of the unfouled bed 22.

As an illustration, and for the sake of discussion, assume that if all the liquid flows through the tubes 24, the pressure drop across the tubes 24 is 1.40614 kg/cm² (20 psi), and if all the gas flows through the tubes 23, the pressure drop across the tubes 1.40614 kg/cm² (20 psi) (20 times the pressure drop of the unfouled catalyst bed 22). When the catalyst bed 22 is not fouled, the majority of gas and liquid will, therefore, flow through the catalyst bed 22. Only a very small fraction of the liquid will pass through the tubes 24. No gas will flow through the tubes 24 because of the liquid seal in the flow receptacles 26. Only a small fraction of the gas will pass through the tubes 23.

As the bed 22 begins to foul, increasing fractions of gas and liquid will be diverted to the respective tubes 23 and 24. A completely plugged bed 22 will be bypassed with a pressure drop of 1.40614 kg/cm² (20 psi). If the bed 22 was not bypassed, the pressure drop would build up rapidly and force a unit shutdown.

Figure 5a illustrates another embodiment of the invention depicted in Figure 5. In this embodiment, the single auxiliary catalyst bed 22 of Figure 22 is replaced by at least two auxiliary catalyst beds herein designated 22a and 22b. Each of these beds operates in the same manner as described above, and each auxiliary bed will increase the operating life of the reactor in its own right. In this fashion, the operating life of the reactor 10' can be extended in multiples of the several fold increases common to only one auxiliary bed and bypass arrangement, as shown in Figure 5.

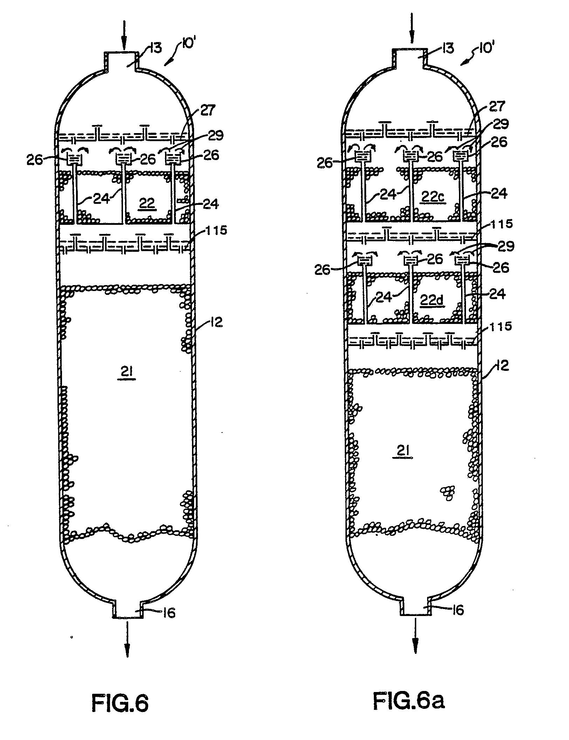

Figure 6 illustrates another embodiment of the invention. In this embodiment, the auxiliary catalyst bed 22 has only the liquid bypass tubes 24. The gas bypass tubes 23 may not be necessary under some conditions. An example will be a situation when the fouled catalyst bed 22 retains enough permeability for the gas to flow through it. Such a situation may exist in reactors operating with a very low gas to liquid ratio. After bed 22 is fouled, the liquid bypasses through the tubes 24. The gas will pass through the fouled bed itself.

Figure 6a illustrates a modification of the alternate embodiment of the invention as depicted in Figure 6. In this modified embodiment, the single auxiliary catalyst bed 22 of Figure 6 is replaced by at least two auxiliary catalyst beds 22c and 22d, respectively, each of which have only liquid bypass tubing 24, as shown. The operating life of the reactor can be extended in multiples of the several fold increases common to only one auxiliary bed as aforementioned.

Although the invention has been described in relation to a hydroprocessing reactor, the invention is not necessarily limited to such a reactor. The invention includes other reactors in which other liquid and gas mixtures react in fixed beds of catalyst or solids. The invention also includes apparatus which uses similar flow arrangements. An example where similar flow arrangement may be used is a packed absorption tower with cocurrent flow of gas and liquid. In this example, the fixed or packed bed of solids does not have a catalytic role. The fixed bed of solids only facilitates contacting between the gas and the liquid.

Many modifications will naturally occur to the skilled practitioner of this art. For example, as described in U.S. Patent 3,524,731, horizontal splash plates or baffles can be provided beneath the liquid and gas bypass tubes. These splash plates would distribute the bypassed material over a larger area of main bed 21. These splash plates or baffles can thus substitute for the flow distributor tray 15. Similarly, as also described in the above U.S. Patent 3,524,731, cap plates may be provided above the longer gas bypass tubes 23 to prevent the liquid from above entering the tubes 23. Tubes 23 or 24 do not have to be the same size.

Example 1

Fouled catalyst bypassing for improving reactor run lengths has been demonstrated in an accelerated or simulated fouling test in the laboratory. Pressure drop build up in a 15.24 cms (six inch) diameter column packed with 1.585 mms (1/16 inch) catalyst extrudates was measured using water and nitrogen feed. Catalyst fouling was produced by spiking the liquid feed with either coke or polymer particles.

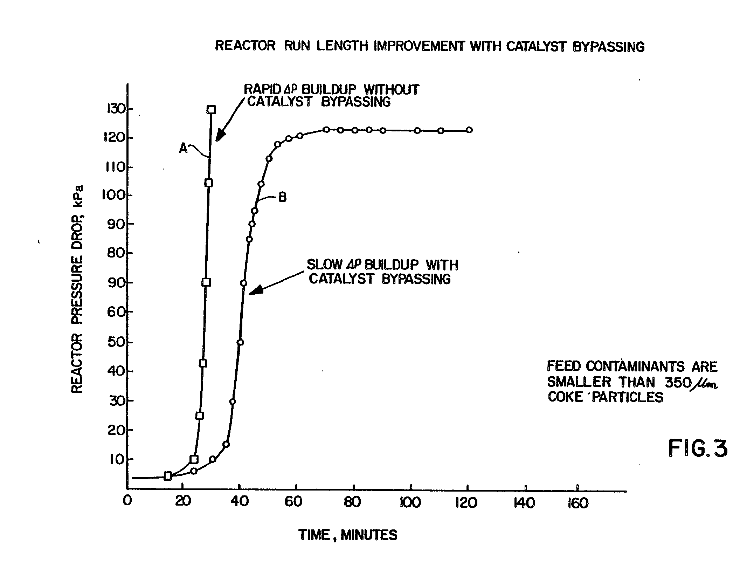

In the first set of experiments, the contaminants in the feed were coke particles. Figure 3 shows the pressure drop build up without any bypassing and also when one auxiliary catalyst bed as shown in Figure 2 was bypassed as per the invention. Without catalyst bypassing, the rapid pressure drop build up necessitated that the reactor be shutdown in thirty minutes, as shown by curve A. The reactor run length of thirty minutes in the accelerated fouling test corresponds to a run length of several weeks to several months in a commercial reactor. With catalyst bypassing, the reactor was run for 120 minutes (Curve B), and could have been run longer. The leveling off of pressure drop is attributed to settling of heavy coke particles above the top auxiliary catalyst bed 22 (Figure 2). Since the bypassed flow contained no contaminant coke particles, the lower bed 21 did not foul and the pressure drop remained constant.

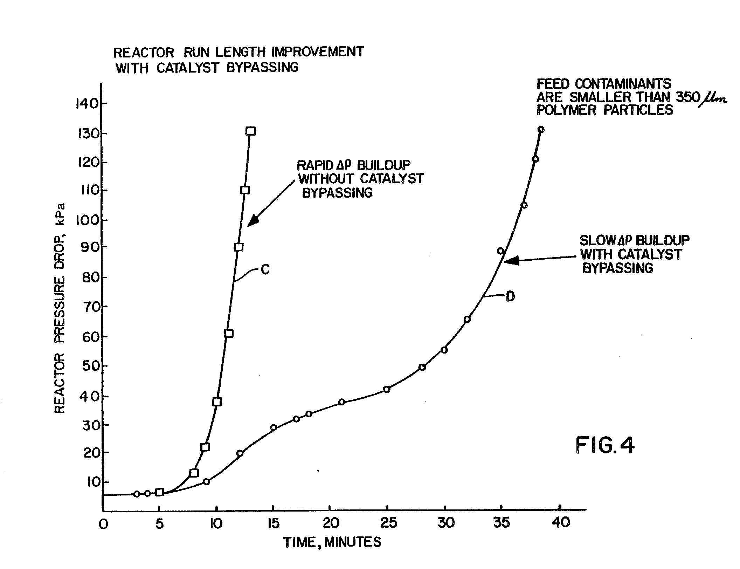

In a second set of experiments, contaminants in the feed were polymer particles. The polymer particles used had a density very close to that of water and, therefore, had no significant settling tendency. Thus, the bypassed flow produced fouling of the lower catalyst bed 21. Figure 4 shows the advantageous effect of catalyst bypassing on reactor run length. The reactor run length increased by a factor of three, from 13 minutes (Curve C) to 38.5 minutes (Curve D).

The above drawings being of an exemplary and schematic nature are only meant to give an understanding of the invention.

Example 2

Fouled catalyst bypassing for improving reactor run lengths has been demonstrated in an accelerated or simulated fouling test in the laboratory. Pressure drop build up in a 15.24 cms (six inch) diameter column packed with 1.585 mms (1/16 inch) catalyst extrudates of cobalt and molybdenum on an alumina support, was measured using water and nitrogen feed. Catalyst fouling was produced by spiking the liquid feed with polymer particles. The polymer particles had a density that was very close to that of water and, therefore, the polymer particles had no significant settling tendency.

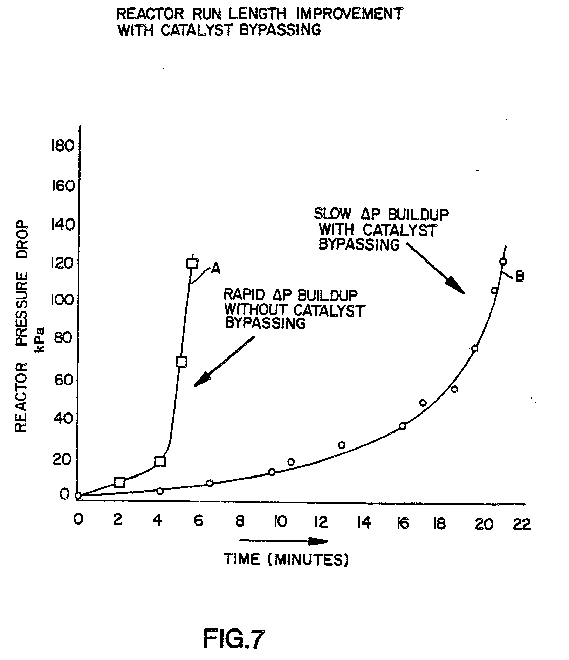

Figure 7 shows the advantageous effect of catalyst bypassing on reactor run length. Without catalyst bypassing, the rapid pressure drop build up necessitated that the reactor be shutdown in 5.5 minutes, as shown by curve A. This reactor run length of 5.5 minutes in the accelerated fouling test corresponds to a run length of several weeks to several months in a commercial reactor. When one auxiliary catalyst bed as shown in Figure 3 was bypassed as per the invention, the reactor run length increased by a factor of about four, from 5.5 minutes (curve A) to 21.0 minutes (curve B).

The above drawings being of an exemplary and schematic nature are only meant to give an understanding of the invention.

In both the examples, the liquid mass velocity was 12680 kg/h·m² (2600 lbs/hr·ft²) and the gas mass velocity was 370 kg/h·m² (75 lbs/hr·ft²).

Claims

1. An apparatus for contacting a gas and a liquid comprising a vessel (12); means (13) for introducing a gas and a liquid into the vessel; at least one main bed (21) of solids disposed in said vessel, and when required, means (16) for the exit of gas and liquid from the vessel; at least one auxiliary bed (22) of solids disposed in said vessel above said main bed for the passage therethrough of gas and liquid; at least one liquid by-pass conduit (24) within said vessel extending through the auxiliary bed up to a level at least as high as the top level of the auxiliary bed, characterized in that the liquid by-pass conduit (24) is an unobstructed tube presenting a selected pressure drop for the passage of liquid therethrough which exceeds the pressure drop for the passage of liquid through the auxiliary bed before the latter becomes fouled but which is not greater than the pressure drop for the passage of liquid through the auxiliary bed when the latter is fouled, whereby during operation, liquid passes preferentially through the auxiliary bed when the pressure drop therethrough is less than the said selected pressure drop, and liquid passes preferentially through the liquid by-pass conduit when the pressure drop through the auxiliary bed exceeds the selected pressure drop due to fouling of the latter.

2. Apparatus as in claim 1 characterized in that the liquid by-pass conduit (24) extends up to a level higher than the top level of the auxiliary bed.

3. Apparatus as in claim 1 or claim 2 characterized in that the liquid by-pass conduit (24) comprises a receptacle (26) at its top end disposed for receiving liquid passing downwards in the vessel whereby when the pressure drop through the auxiliary bed is less than the pressure drop through the liquid by-pass conduit, the liquid by-pass conduit provides a liquid seal, and liquid is distributed to the auxiliary bed (22) by spilling from the receptacle (26).

4. Apparatus as in any one of claims 1 to 3 characterized by comprising at least one gas by-pass conduit (23) in the form of an unobstructed open tube within said vessel and extending through the auxiliary bed (22) up to a level above the top of the liquid by-pass conduit (24) and presenting a selected pressure drop for the passage of gas therethrough which exceeds the pressure drop for the passage of gas through the auxiliary bed when the latter is not fouled whereby, during operation, gas passes preferentially through the auxiliary bed when the pressure drop therethrough is less than the pressure drop through the gas by-pass conduit (23), and gas passes preferentially through the gas by-pass conduit (23) when the pressure drop therethrough is exceeded by the pressure drop through the auxiliary bed (22).

5. Apparatus as in any one of claims 1 to 4 characterized by at least two auxiliary beds (22a, 22b) disposed in tiers above said main bed (21), each auxiliary bed having at least one by-pass conduit (23, 24).

6. Apparatus as in any one of claims 1 to 5 characterized by comprising a distributor (15) above each bed (21, 22).

7. Apparatus as in any one of claims 1 to 6 characterized in that the beds comprise at least one catalyst.

8. Apparatus as in claim 7 characterized in that said catalyst comprises one or more metals selected from cobalt, molybdenum and nickel disposed on an alumina support.

9. The use of apparatus according to claim 7 or claim 8 in a process selected from at least one of the following: hydrogenation, hydrodesulfurization, hydrodenitrogenation, hydrotreating, hydrofinishing and hydrocracking.

## Patentansprüche

1. Vorrichtung zum Kontaktieren eines Gases und einer Flüssigkeit, die einen Behälter (12), Mittel (13) zur Einleitung eines Gases und einer Flüssigkeit in den Behälter mindestens ein Hauptbett (21) aus in den Behälter eingebrachten Feststoffen und, wenn erforderlich, Mittel (16) für den Austritt von Gas und Flüssigkeit aus dem Behälter, mindestens ein Hilfsbett (22) aus in den Behälter eingebrachten Feststoffen über dem Hauptbett für den Durchgang von Gas und Flüssigkeit und mindestens eine Flüssigkeitsumgehungsleitung (24) in dem Behälter aufweist, die sich durch das Hilfsbett bis hinauf zu einem Niveau erstreckt, das mindestens so hoch ist wie die Oberseits des Hilfsbettes, dadurch gekennzeichnet, daß die Flüssigkeitsumgehungsleitung (24) ein lichtes Rohr ist, das einen ausgewählten Druckabfall für den Durchgang von Flüssigkeit darstellt, der den Druckabfall für den Durchgang von Flüssigkeit durch das Hilfsbett, bevor dieses verschmutzt, übersteigt, aber der nicht größer ist als der Druckabfall für den Durchgang von Flüssigkeit durch das Hilfsbett, wenn dieses verschmutzt ist, so daß im Betrieb Flüssigkeit vorzugsweise durch das Hilfsbett strömt, wenn der Druckabfall über diesem geringer ist als der ausgewählte Druckabfall, und Flüssigkeit vorzugsweise durch die Flüssigkeitsumgehungsleitung strömt, wenn der Druckabfall über dem Hilfsbett aufgrund dessen Verschmutzung den ausgewählten Druckabfall überschreitet.

2. Vorrichtung nach Anspruch 1, dadurch gekennzeichnet, daß sich die Flüssigkeitsumgehungsleitung (24) bis hinauf zu einem Niveau erstreckt, das höher ist als die Oberseite des Hilfsbettes.

3. Vorrichtung nach Anspruch 1 oder 2, dadurch gekennzeichnet, daß die Flüssigkeitsumgehungsleitung (24) ein Gefäß (26) an seinem oberen Ende aufweist, das zur Aufnahme von sich im Behälter nach unten bewegender Flüssigkeit dient, so daß die Flüssigkeitsumgehungsleitung einen Flüssigkeitsverschluß liefert und Flüssigkeit durch Überlauf des Gefäßes (26) im Hilfsbett (22) verteilt wird, wenn der Druckafall über dem Hilfsbett geringer ist als der Druckabfall über der Flüssigkeitsumgehungsleitung.

4. Vorrichtung nach einem der Ansprüche 1 bis 3, dadurch gekennzeichnet, daß sie mindestens eine Gasumgehungsleitung (23) in Form eines lichten offenen Rohres in dem Behälter aufweist, die sich durch das Hilfsbett (22) bis hinauf auf ein Niveau oberhalb des oberen Endes der Flüssigkeitsumgehungsleitung (24) erstreckt und einen ausgewählten Druckabfall für den Durchgang von Gas darstellt, der den Druckabfall für den Durchgang von Gas durch das Hilfsbett überschreitet, wenn letzteres nicht verschmutzt ist, so daß im Betrieb Gas vorzugsweise durch das Hilfsbett strömt, wenn der Druckabfall über diesem geringer ist als der Druckabfall über der Gasumgehungsleitung (23), und Gas vorzugsweise durch die Gasumgehungsleitung (23) strömt, wenn der Druckabfall über dieser durch den Druckabfall über dem Hilfsbett (22) übertroffen wird.

5. Vorrichtung nach einem der Ansprüche 1 bis 4, dadurch gekennzeichnet, daß sie mindestens zwei Hilfsbetten (22a, 22b) aufweist, die etagenförmig über dem Hauptbett (21) angeordnet sind, wobei jedes Hilfsbett mindestens eine Umgehungsleitung (23, 24) besitzt.

6. Vorrichtung nach einem der Ansprüche 1 bis 5, dadurch gekennzeichnet, daß sie über jedem Bett (21, 22) einen Verteiler (15) aufweist.

7. Vorrichtung nach einem der Ansprüche 1 bis 6, dadurch gekennzeichnet, daß die Betten mindestens einen Katalysator enthalten.

8. Vorrichtung nach Anspruch 7, dadurch gekennzeichnet, daß der Katalysator ein oder mehrere Metalle ausgewählt aus Kobalt, Molybdän und Nickel aufgebracht auf einen Aluminiumoxidträger umfaßt.

9. Verwendung der Vorrichtung nach Anspruch 7 oder 8 in einem aus den folgenden Verfahren ausgewählten Verfahren: Hydrierung Hydrodesulforierung, Hydrodenitrierung, Wasserstoffbehandlung, Hydrofinieren und Hydrocracken.

## Revendications

1. Dispositif de mise en contact d'un gaz et d'un liquide comprenant un récipient (12); un moyen (13) d'introduction d'un gaz et d'un liquide dans le récipient; au moins un lit principal (21) de solides disposés dans ledit récipient et, quand besoin est, un moyen (16) de sortie de gaz et de liquide à partir du récipient; au moins un lit auxiliaire (22) de solides disposé dans ledit récipient au-dessus dudit lit principal pour être traversé par du gaz et du liquide; au moins un conduit de dérivation du liquide (24) situé dans ledit récipient s'étendant à travers le lit auxiliaire jusqu'à un niveau au moins aussi haut que le niveau du sommet du lit auxiliaire, caractérisé en ce que le conduit de dérivation de liquide (24) est un tube non obstrué faisant subir au liquide qui le traverse une perte de charge choisie qui dépasse la perte de charge du liquide à la traversée du lit auxiliaire avant encrassement de ce dernier mais qui n'est pas supérieure à la perte de charge subie par le liquide à la traversée du lit auxiliaire quand ce dernier est encrassé, de sorte que pendant le fonctionnement, le liquide traverse préférentiellement le lit auxiliaire que la perte de charge à la traversée de celui-ci est moindre que ladite perte de charge choisie, et que le liquide traverse préférentiellement le conduit de dérivation de liquide quand la perte de charge à la traversée de celui-ci dépasse la perte de charge choisie du fait d'un encrassement de ce dernier.

2. Dispositif selon la revendication 1, caractérisé en ce que le conduit de dérivation de liquide (24) s'étend vers le haut jusqu'à un niveau plus haut que le niveau du sommet du lit auxiliaire.

3. Dispositif selon la revendication 1 ou 2, caractérisé en ce que le conduit de dérivation de liquide (24) comprend à son extrémité supérieure un réceptacle (26) disposé de façon à recevoir le liquide passant vers le bas dans le récipient de sorte que, lorsque la perte de charge à la traversée du lit auxiliaire est moindre que la perte de charge à la traversée du conduit de dérivation de liquide, le conduit de dérivation de liquide forme un joint d'étanchéité au liquide et le liquide est distribué sur le lit auxiliaire (22) en se déversant à partir du réceptacle (26).

4. Dispositif selon l'une quelconque des revendications 1 à 6 caractérisé en ce qu'il comprend au moins un conduit de dérivation de gaz (23) sous la forme d'un tube ouvert non obstrué situé dans ledit récipient et s'étendant à travers le lit auxiliaire (22) jusqu'à un niveau situé au-dessus du sommet du conduit de dérivation de liquide (24) et faisant subir au gaz à sa traversée une perte de charge choisie qui dépasse la perte de charge subie par le gaz à la traversée du lit auxiliaire quand celui-ci n'est pas encrassé de sorte que, en fonctionnement, le gaz traverse préférentiellement le lit auxiliaire quand la perte de charge à la traversée de celui-ci est moindre que la perte de charge à la traversée du conduit de dérivation de gaz (23), et que le gaz traverse préférentiellement le conduit de dérivation de gaz (23) quand la perte de charge à la traversée de celui-ci est dépassée par la perte de charge à la traversée du lit auxiliaire (22).

5. Dispositif selon l'une quelconque des revendications 1 à 4, caractérisé par au moins deux lits auxiliaires (22a, 22b) disposés en étages au-dessus dudit lit principal (21), chaque lit auxiliaire comportant au moins un conduit de dérivation (23, 24).

6. Dispositif selon l'une quelconque des revendications 1 à 5, caractérisé en ce qu'il comprend un distributeur (15) au-dessus de chaque lit (21, 22).

7. Dispositif selon l'une quelconque des revendications 1 à 6, caractérisé en ce que les lits comprennent au moins un catalyseur.

8. Dispositif selon la revendication 7, caractérisé en ce que ledit catalyseur comprend un ou plusieurs métaux choisis parmi le cobalt, le molybdène et le nickel disposés sur un support d'alumine.

9. Utilisation du dispositif selon la revendication 7 ou 8 dans un traitement choisi parmi l'un an moins des suivants: hydrogénation, hydrodésulfuration, hydrodésazotation, hydro-traitement, hydrofinition et hydrocraquage.

PRIOR ART

FIG.1

PRIOR ART

FIG.1a

FIG. 2

FIG. 2a

REACTOR RUN LENGTH IMPROVEMENT WITH CATALYST BYPASSING

FIG.3

FIG. 4

REACTOR RUN LENGTH IMPROVEMENT WITH CATALYST BYPASSING

FEED CONTAMINANTS ARE SMALLER THAN 350 $\mu m$ POLYMER PARTICLES

SLOW $\Delta P$ BUILDUP WITH CATALYST BYPASSING

RAPID $\Delta P$ BUILDUP WITHOUT CATALYST BYPASSING

REACTOR PRESSURE DROP, kPa

TIME, MINUTES

FIG.5

FIG.5a

FIG.6

FIG.6a

REACTOR RUN LENGTH IMPROVEMENT
WITH CATALYST BYPASSING

FIG.7